# DEMANDE DE BREVET EUROPEEN

(11) **EP 0 542 650 A1**
(43) Date de publication de la demande: **19.05.1993**
(21) Numéro de dépôt: 92420409.2
(22) Date de dépôt: 12.11.1992
(51) Int. Cl.: B62K 19/36, B62J 1/08

(54) **Dispositif de fixation et d'orientation d'une selle de vélo automatique**

(30) Priorité: 12.11.1991 FR 9114360
(71) Demandeur: Fauvet, Jean-François, 38000 Grenoble (FR)
(72) Inventeur: Fauvet, Jean-François, 38000 Grenoble (FR)

(57) **Abrégé**

La présente invention concerne un dispositif de tige de selle de vélo qui permet de faciliter la pratique en descentes et en montées très pentues.

Le dispositif représenté sur la figure 1 comporte une articulation de la tige de selle constituée d'un coussinet (1) autour duquel s'articule dans le plan sagittal une couronne (2). La partie de la tige de selle (3) qui va à la selle est fixée à la couronne (2). La partie de la tige de selle (4) qui va au cadre est fixée au coussinet (1). Le coussinet (1) comporte un trou (5) qui laisse passer un doigt de blocage (6). La couronne (2) comporte trois trous (7), un vertical par rapport à l'axe de rotation pour la position normale, un deuxième incliné de dix à vingt degrés vers l'avant par rapport à l'axe de rotation pour la position montée, et un troisième, incliné de dix à quatre vingt dix degrés vers l'arrière par rapport à l'axe de rotation, pour la position descente. Le doigt de blocage (6) est maintenu dans les trous (7) par un ressort (8) en compression contenu dans le coussinet (1). Ce doigt de blocage (6) est commandé par un levier (9), placé au guidon du vélo qui agit par l'intermédiare d'un câble (10) qui passe dans une gaine (11), qui permet de manoeuvrer la selle vers l'avant ou l'arrière. Un ressort (12) en forme d'anneau élastique est placé autour de la tige de selle (4) pour faire office de butée à la couronne (2).

Le dispositif est particulièrement destiné à faciliter la pratique du vélo sur tous les terrains.

## Description

La présente invention concerne un dispositif de tige de selle de vélo qui permet de faciliter la pratique en descentes et en montées .

Traditionellement la selle d'un vélo et le haut de la tige de selle sont immobilisés, ainsi l'utilisateur ne peut pas modifier la position de la selle afin de s'avancer suffisamment sur le vélo, en montée, afin d'éviter le basculement en arrière, ni de se reculer suffisamment, en descente, pour éviter de basculer par dessus la roue avant avec son vélo .

Le dispositif selon l'invention permet de remédier à cet inconvénient . Il comporte en effet, une tige de selle articulée dans le plan sagittal entre cinq et quinze centimètres sous la selle . Cette articulation est constituée d'un coussinet autour duquel pivote dans le plan sagittal une couronne . La partie de la tige de selle qui va à la selle est fixée à la couronne . La partie de la tige de selle qui va au cadre est fixée au coussinet . Le coussinet comporte un trou qui laisse passer un doigt de blocage . La couronne comporte trois trous, un vertical par rapport à l'axe de rotation pour la position normale, un deuxième incliné de dix à vingt degrés vers l'avant par rapport à l'axe de rotation pour la position montée, et un troisième, incliné de dix à quatre vingt dix degrés vers l'arrière par rapport à l'axe de rotation, pour la position descente . Le doigt de blocage est maintenu dans les trous par un ressort en compression contenu dans le coussinet . Ce doigt de blocage est commandé par un levier , placé au guidon du vélo qui agit sur le doigt de blocage par l'intermédiaire d'un cable, qui passe dans une gaine, qui relie la selle au guidon L' ensemble ; levier au guidon, cable, gaine, permet de manoeuvrer la selle vers l'avant ou l'arrière sans perdre le controle du vélo . Un ressort en forme d'anneau élastique est placé autour de la tige de selle pour faire office de butée à la couronne . Ainsi l'utilisateur, lorsqu'il aborde une montée pentue, actionne le levier, placée au guidon, dégageant ainsi le doigt de blocage du trou central, il peut alors basculer le selle vers l'avant, il relâche le levier, le doigt de blocage, maintenu par le ressort qui est dans la tige de selle, vient alors se loger dans le trou avant . La selle est alors plus en avant et prend l'inclinaison définie, l'utilisateur est mieux placé pour pédaler en montée : il a moins de chance de voir la roue avant se soulever et le vélo se cabrer . L'inclinaison de la selle lui permet d'adapter au mieux son placement en montée sans préjudice sur les qualités d'adhérence de la roue arrière du vélo . La monté effectuée l'utilisateur actionne le levier, la selle peut reprendre sa position centrale . A l'inverse, l'utilisateur, lorsqu'il aborde une descente pentue, actionne le levier sous la selle ou au guidon dégageant ainsi le doigt de blocage du trou centrale, il peut alors basculer la selle vers l'arrière, il relâche le levier, le doigt de blocage, maintenu par le ressort qui est dans la tige de selle, vient alors se loger dans le trou arrière . La selle est alors plus en arrière et prend l'inclinaison définie, l'utilisateur est mieux placé pour la descente . Il peut en effet se laisser glisser vers le bas et l'arrière, à volonté, évitant ainsi de basculer par dessus la roue avant .

Selon une forme de réalisation préférentielle l'articulation de la tige de selle est constituée d'un coussinet autour duquel s'articule dans le plan sagittal une couronne . La partie de la tige de selle qui va à la selle est fixée à la couronne . La partie de la tige de selle qui va au cadre est fixée au coussinet . Le coussinet comporte un trou qui laisse passer un doigt de blocage . La couronne comporte trois trous , un vertical par rapport à l'axe de rotation normale, un deuxième incliné de dix à vingt degrés vers l'avant par rapport à l'axe de rotation pour la position montée, et un troisième, incliné de dix à quatre vingt degrés vers l'arrière par rapport à l'axe de rotation, pour la position descente . Le doigt de blocage est maintenu dans les trous par un ressort en compression contenu dans le coussinet . Ce doigt de blocage est commandé par un levier, placé au guidon du vélo qui agit sur le doigt de blocage par l'intermédiaire d'un cable qui passe dans une gaine , qui permet de manoeuvrer la selle vers l'avant ou l'arrière . Un ressort en forme d'anneau élastique est placé autour de la tige de selle pour faire office de butée à la couronne .

Selon une variante de cette forme de réalisation la partie de la tige de selle qui va au cadre est fixé à la couronne et la partie de la tige de selle fixée à la selle, est fixée au coussinet . Le doigt de blocage, placé dans le coussinet, est commandé par un levier, placé sous la selle, qui permet de le dégager quand l'utilisateur veut manoeuvrer la selle vers l'avant ou l'arrière .

Selon la forme de réalisation avec un coussinet il est possible de placer quatre trous ou plus, afin de multiplier les positions possibles à prendre pour la selle .

Selon une variante de réalisation l'articulation de la tige de selle est constituée d'une entretoise et d'un plat montés sur un axe transversal . Le plat est fixé à la partie de la tige de selle, fixée à la selle . L'entretoise est fixée à la partie de la tige de selle, fixée au cadre . Le plat comporte une encoche verticale qui laisse passer le doigt de blocage . L'entretoise comporte trois encoches : une verticale pour la position normale, une inclinée de dix à vingt degrés vers l'avant par rapport à l'axe de rotation pour la position montée, et une, inclinée de dix à quatre vingt dix degrés vers l'arrière par rapport à l'axe de rotation, pour la position descente . Le doigt de blocage est maintenu dans les encoches par un ressort en compression contenu dans la tige de selle . Ce doigt de blocage est commandé par un levier, placé au guidon, qui permet de la dégager quand l'utilisateur veut manoeuvrer la selle vers l'avant ou l'arrière . Le plat comporte deux ergots faisant office de butée pour limiter et bloquer le mouvement de rotation .

Selon une variante, le doigt de blocage et le ressort ne sont pas dans le tige de selle mais à l'extérieur de la tige de selle . Le doigt de blocage est fixé à l'extrémité d'un tube qui contient la tige de selle .

Selon une variante, le blocage dans la position désirée n'est pas réalisé par un doigt de blocage mobile dans l'axe vertical mais par un doigt de blocage mobile dans le sens transversal et qui vient se loger dans des orifices réalisés transversalement dans l'entretoise et le plat, qui assurent la rotation de l'articulation .

Selon une variante le blocage dans la position désirée, n'est pas réalisé par un doigt de blocage mobile dans l'axe vertical, mais par une pince, mobile dans le plan sagittal selon un axe transversal, pourvue d'ergots qui viennent se loger dans des encoches ou trous pratiqués dans l'entretoise .

Selon une variante du dispositif selon l'invention les butées avant et arrière sont pourvues d'un ressort ou d'un bloc élastique qui permet de faire revenir la tige de selle plus facilement à la position centrale .

Les figures 1 et 2 représentent en coupe le dispositif selon l'invention .

Les figures 3 et 4 représentent en coupe une variante du dispositif selon l'invention

Les figures 5 et 6 représentent en coupe un détail d'une variante de ce dispositif

La figure 7 représente en coupe une variante du dispositif selon l'invention .

Les figures 8 et 9 représentent des détails de variantes du dispositif .

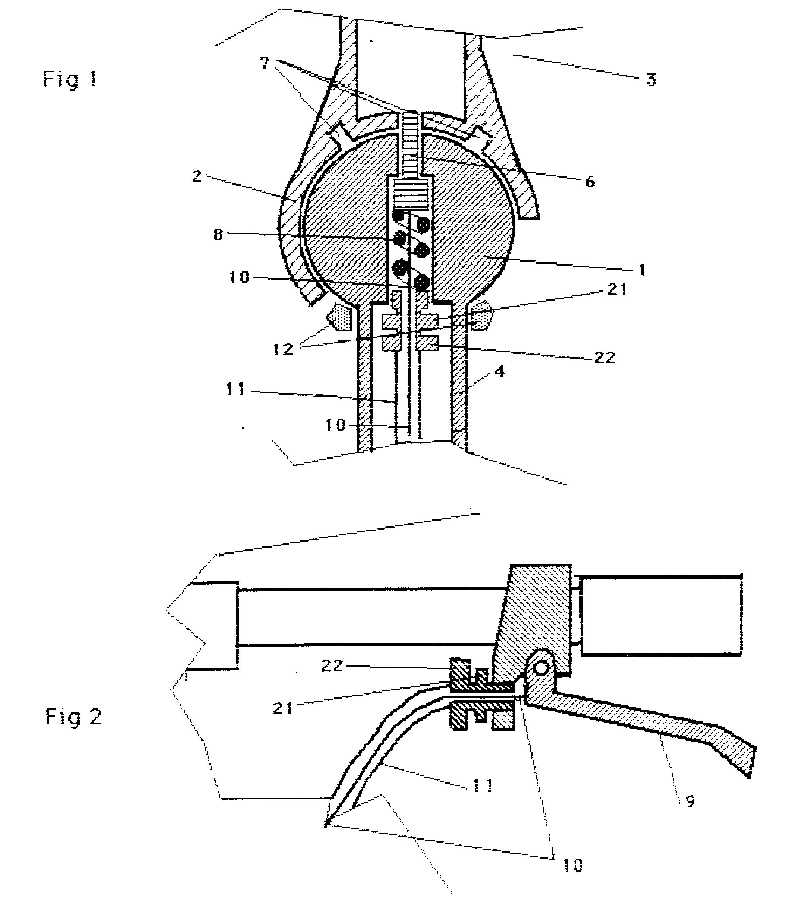

Le dispositif représenté sur les figures 1 et 2 comporte une articulation de la tige de selle constitué d'un coussinet (1) autour duquel s'articule dans le plan sagittal une couronne (2) . La partie de la tige de selle (3)qui va à la selle est fixée à la couronne (2) . La partie de la tige de selle (4) qui va au cadre est fixée au coussinet (1) . Le coussinet (1) comporte un trou (5) qui laisse passer un doigt de blocage (6) . La couronne (2) comporte trois trous (7) , un vertical par rapport à l'axe de rotation pour la position normale, un deuxième incliné de dix à vingt degrés vers l'avant par rapport à l'axe de rotation pour la position montée, et un troisième, incliné de dix à quatre vingt dix degrés vers l'arrière par rapport à l'axe de rotation, pour la position descente . Le doigt de blocage (6) est maintenu dans les trous (7) par un ressort (8) en compression contenu dans le coussinet (1) . Ce doigt de blocage (6) est commandé par un levier (9), placé au guidon du vélo qui agit sur le doigt de blocage (6) par l'intermédiaire d'un cable (10) qui passe dans une gaine (11), qui permet de manoeuvrer la selle vers l'avant ou l'arrière . La fixation et le réglage en longueur de la gaine (11) sur le coussinet (1) est réalisée par une vis percée (22), bloquée par un contre écrou (21) . Un ressort (12) en forme d'anneau élastique est placé autour de la tige de selle (4) pour faire office de butée à la couronne (2) .

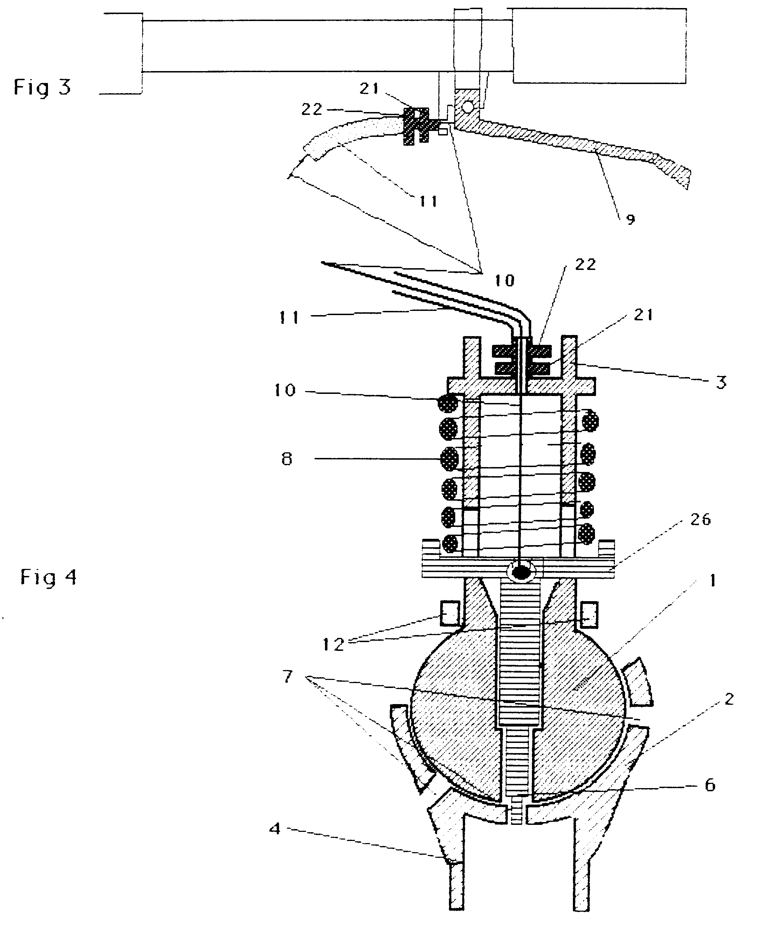

Les figures 3 et 4 représentent une variante du dispositif selon l'invention, l'articulation de la tige de selle est constituée d'un coussinet (1) autour duquel s'articule dans le plan sagittal une couronne (2) . La partie de la tige de selle (4) qui va au cadre est fixée à la couronne (2) . La partie de la tige de selle (3) qui va à la selle, est fixée au coussinet (1) .Le coussinet (1) comporte un trou (5) qui laisse passer un doigt de blocage (6) . La couronne comporte trois trous (7), un vertical par rapport à l'axe de rotation pour la position normale, un deuxième incliné de dix à vingt degrés vers l'avant par rapport à l'axe de rotation pour la position montée, et un troisième, incliné de dix à quatre vingt dix degrés vers l'arrière par rapport à l'axe de rotation, pour la position descente . Le doigt de blocage (6) est maintenu dans les trous (7) par un ressort (8) en compression extérieur à la tige (3) entre une bague (26) qui maintient le doigt (6)et un relief de la tige (3) . Ce doigt de blocage (6) est commandé par un levier (9), placé au guidon du vélo qui agit sur le doigt de blocage (6) par l'intermédiaire d'un cable (10) qui passe dans une gaine (11), qui permet de manoeuvrer la selle vers l'avant ou l'arrière . La fixation et le réglage en longueur de la gaine (11) sur la tige (3) sont réalisés par une vis percée (22), bloquée par un contre écrou (21) . Un ressort (12) en forme d'anneau élastique est placé autour de la tige de selle (3) pour faire office de butée à la couronne (2) .

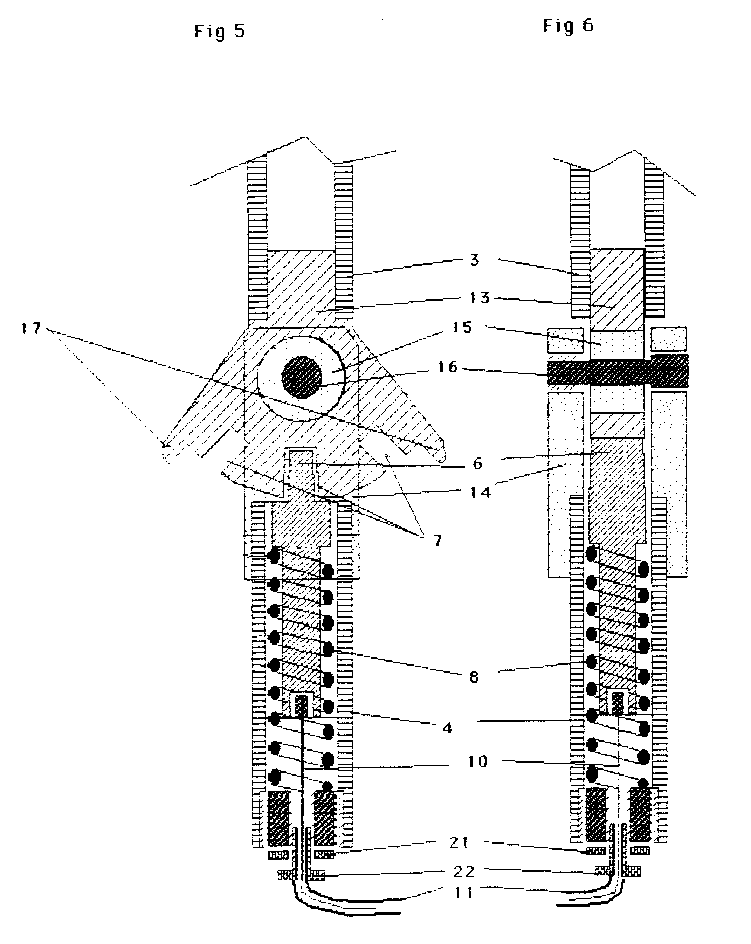

Les figures 5 et 6 représentent une variante du dispositif selon l'invention . Il comporte un axe (16), sur lequel s'articule un plat (13) fixé à la tige de selle (3), le plat (13) est mobile par rapport à une entretoise (14), fixée sur la tige (4) qui va dans le cadre du vélo . L'articulation est bloquée par un doigt de blocage (6) maintenu par un ressort (8) dans un des trois trous (7) . Ce doigt de blocage (6) est commandé par un levier (9), placé au guidon du vélo qui agit sur le doigt de blocage (6) par l'intermédiaire d'un cable (10) qui passe dans un gaine (11), qui permet de manoeuvrer la selle vers l'avant ou l'arrière . La fixation et le réglage en longueur de la gaine (11) sur la tige (4) est réalisée par une vis percée (22), bloquée par un contre écrou (21) . Il peut ainsi basculer la tige de selle (3) vers l'avant . Le mouvement est stoppé par la butée (17) l'utilisateur relâche alors le levier (9), le doigt de blocage (6) vient alors dans le trou (7) placée en avant . Il peut aussi basculer la tige de selle (3) vers l'arrière . Le mouvement est stoppé par la butée (17), l'utilisateur relâche alors le levier (9), le doigt de blocage (6) vient alors dans le trou (7) placée en arrière . L'écart entre les trous (7) est tel que la rotation peut se faire de dix à vingt degrés vers l'avant, ou de dix à quatre vingt dix degrés vers l'arrière .

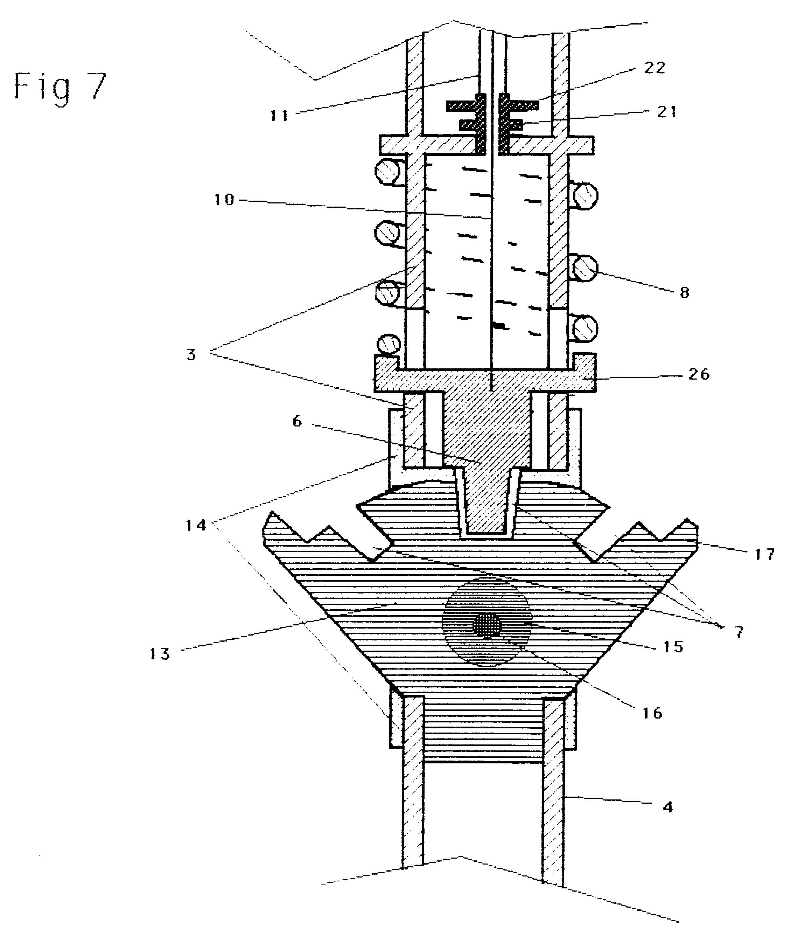

Dans la forme de réalisation selon la figure 7 le ressort (8) est à l'extérieur de la tige de selle (3) et il pousse sur une bague (26) qui est fixée au doigt de blocage (6) .

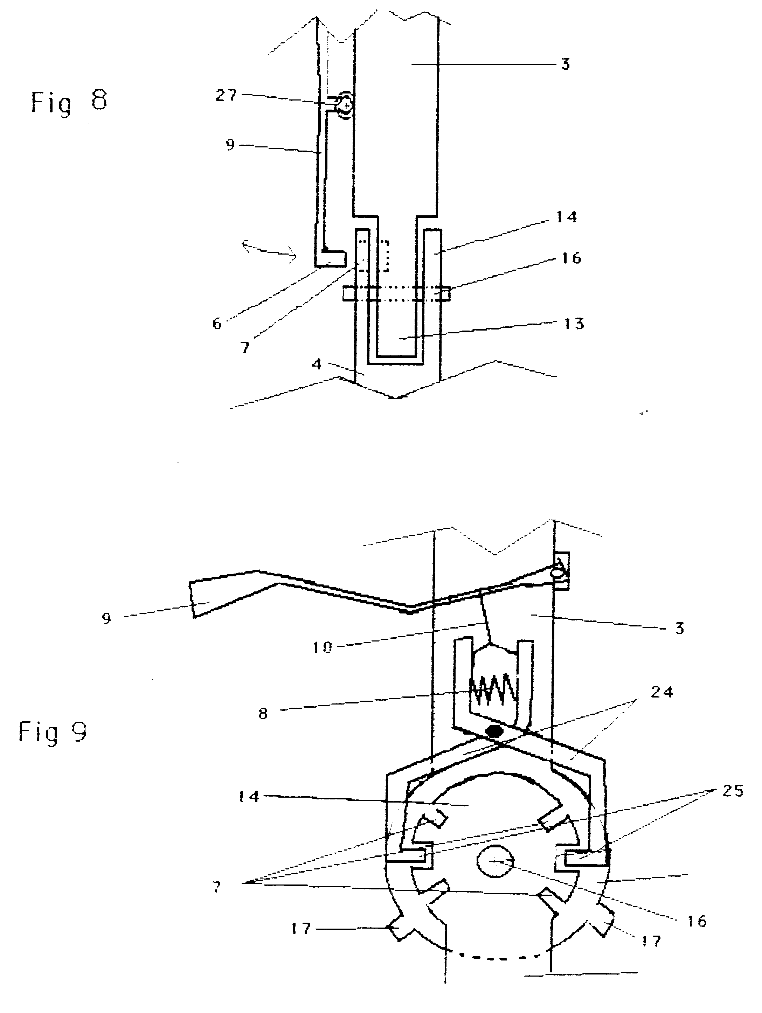

Dans la forme de réalisation selon la figure 8 le doigt de blocage (9) est transversal et vient se loger dans des trous (7) effectués transversalement dans le plat (13) et l'entretoise (14) . L'utilisateur débloque l'articulation en actionnant le levier (9) autour de l'axe (27) .

Dans la forme de réalisation selon le figure 9, le blocage de l'articulation est assuré par une pince (24) qui maintient des ergots (25) dans les trous(7) grâce à la pression d'un ressort (8) . Le mouvement de la pince (24) est assurée par un levier (9) et un câble (10) placé sous la selle .

Le dispositif selon l'invention est particulièrement destiné à faciliter la pratique du vélo sur tous les terrains lors des descentes et des montées pentues .

## Revendications

**1)** Le dispositif pour faciliter l'exécution des descentes et des montés pentues est caractérisé en ce qu'il comporte une articulation entre la partie de la tige de selle (3) fixée à la selle et la partie de la tige de selle (4) qui va au cadre du vélo, cette articulation est mobile dans le plan sagittal, elle est constituée d'un coussinet (1) autour duquel s'articule dans le plan sagittal une couronne (2) . La partie de la tige de selle (3) qui va à la selle est fixée à la couronne (2).

**2)** Dispositif selon la revendication 1 caractérisé en ce que l'articulation est bloquée par un doigt de blocage (6), repoussé par un ressort (8) contenu dans le coussinet (1), dans des trous (7), disposés dans la couronne .

**3)** Dispositif selon la revendication 1 et 2 caractérisé en ce que la rotation est possible lorsque l'utilisateur manoeuvre le levier (9) placé au guidon du vélo . Le levier (9) tire un câble (10) contenu dans une gaine (11) , qui dégage le doigt (6) des trous (7) .

**4)** Dispositif selon la revendication 1 , 2, et 3 caractérisé en ce que les trous (7) sont séparés de telle sorte que la rotation puisse se faire de quinze degrés à quatre vingt dix degrés vers l'arrière, elle est alors bloquée par un ressort (12) en forme d'anneau élastique placé autour de la tige de selle (4) pour faire office de butée à la couronne (2) . La rotation peut se faire de quinze degrés vers l'avant, elle est alors bloquée par un ressort (12) en forme d'anneau élastique .

**5)** Selon une variante le dispositif selon la revendication 1 est caractérisé en ce que l'articulation de la tige de selle est constituée d'un coussinet (1) autour duquel s'articule dans le plan sagittal une couronne (2) . La partie de la tige de selle (4) qui va au cadre est fixée à la couronne (2) . La partie de la tige de selle (3) qui va à la selle, est fixée au coussinet (1) .Le coussinet (1) comporte un trou (5) qui laisse passer un doigt de blocage (6) . La couronne comporte trois trous (7), un vertical par rapport à l'axe de rotation pour la position normale, un deuxième incliné de dix à vingt degrés vers l'avant par rapport à l'axe de rotation pour la position montée, et un troisième, incliné de dix à quatre vingt dix degrés vers l'arrière par rapport à l'axe de rotation, pour la position descente . Le doigt de blocage (6) est maintenu dans les trous (7) par un ressort (8) en compression extérieur à la tige (3) entre une bague (26) qui maintient le doigt (6) et un relief de la tige (3) .

**6)** Selon une variante le dispositif selon la revendication 1 est caractérisé en ce que l'articulation comporte un axe (16), sur lequel s'articule un plat (13) fixé à la tige de selle (3), le plat (13) est mobile par rapport à une entretoise (14), fixée sur la tige (4) qui va dans le cadre du vélo . L'articulation est bloquée par un doigt de blocage (6) maintenu par un ressort (8) dans un des trois trous (7) . Ce doigt de blocage (6) est commandé par un levier (9), placé au guidon du vélo qui agit sur le doigt de blocage (6) par l'intermédiaire d'un câble (10) qui passe dans une gaine (11), qui permet de manoeuvrer la selle vers l'avant ou l'arrière .

**7)** Dispositif selon la revendication 6 caractérisé en ce que l'articulation est bloquée par un doigt de blocage (16) mobile dans l'axe transversal et qui vient se bloquer dans des trous transversaux (18) pratiqués dans les rondelles (5) et (4) .

**8)** Dispositif selon la revendication 6 caractérisé en ce que le blocage de l'articulation est assuré par une pince (24) qui maintient des ergots (25) dans les trous (7) grâce à la pression d'un ressort (8) . Le mouvement de la pince (24) est assuré par un levier (9) et un câble (10) placés sous la selle .
